# EUROPÄISCHE PATENTANMELDUNG

(11) **EP 0 849 356 A2**
(43) Veröffentlichungstag der Anmeldung: **24.06.1998**
(21) Anmeldenummer: 97120048.0
(22) Anmeldetag: 15.11.1997
(51) Int. Cl.: C12C 1/16

(54) **Verfahren zum Herstellen von Maischprodukten**

(30) Priorität: 20.12.1996 DE 19653348
(71) Anmelder: Weisser, Horst, Univ.-Prof. Dr.-Ing., 85350 Freising-Weihenstephan (DE); Back, Werner, Univ.-Prof. Dr.-Ing., 85350 Freising-Weihenstephan (DE); HOSOKAWA ALPINE Aktiengesellschaft, D-86199 Augsburg (DE)
(72) Erfinder: Lotz, Markus, 85354 Freising (DE); Krottenthaler, Martin Dr., 84032 Altdorf (DE); Degant, Oskar, 86477 Adelsried (DE)
(74) Vertreter: Charrier, Rolf, Dipl.-Ing.

(57) **Zusammenfassung**

Bei einem Verfahren zum Herstellen von Maischprodukten wird das Mahlgut entspelzt, die Spelzen von den Körnern getrennt und sodann die Körner zu Mehl verarbeitet. Das Mahlgut wird nach der Mahlung fraktioniert, wobei eine erste Feingutfraktion erhalten wird. Die von der ersten Feingutfraktion abgetrennte Grobgutfraktion wird zusammen mit den abgetrennten Spelzen vermahlen und fraktioniert, wobei eine zweite Feingutfraktion erhalten wird.

## Beschreibung

Die Erfindung bezieht sich auf ein Verfahren und eine zugehörige Anlage zur Herstellung von Maischprodukten aus Darrmalz und/oder Rohfrucht ( z.B. Reis, Mais ) als Ausgangsprodukt zur Bierherstellung.

Das klassische Verfahren der Bierherstellung besteht darin, daß Darrmalz grob zu schroten und sodann zur Bildung einer Maische mit Wasser zu versetzen Das Malz liefert dabei den vergärbaren Extrakt der Bierwürze.

Für die Qualität des Bieres hinsichtlich Geschmack, Farbe, Schaum und weiterer chemischer und physikalischer Biereigenschaften ist der Vorgang des Mälzens von entscheidender Bedeutung.

Da das Ausgangsprodukt für das Mälzen jedoch ein Naturprodukt ist, sind Schwankungen der Gerstenqualität aufgrund unterschiedlicher Gerstensorten, Anbaugebieten und den jeweiligen Witterungseinflüssen unvermeidlich.

Daraus ergeben sich Unterschiede im Stärkegehalt und dem Proteingehalt, sowie der Beschaffenheit der das Korn umschließenden Spelzen.

Derartige Schwankungen können sich auf die Qualität der späteren Biere auswirken. Schiechte Qualität der Malze bedeuten zudem auch eine weniger wirtschaftliche Verarbeitung mit höheren Kosten.

So weisen Gersten mit einem hohem Proteingehalt einen niedrigen Stärkegehalt und damit eine niedrigen Extraktgehalt auf. Sie lassen sich schwer vermälzen und verbrauen. Gersten, die einen hohen Stärkegehalt aufweisen führen dagegen zu einem hohen Extraktgehalt und weisen eine gute Vermälz- und Verbraubarkeit auf.

Wird beim Maischen Malzschrot verwendet, das aus schiecht gelöstem Braumalz besteht, also ungelöste Stärkebestandteile aufweist, ist die Extraktausbeute bei der Würzegewinnung unzureichend. Aus einer gegebenen Menge Braumalz kann dabei zur Erzielung einer bestimmten Qualität nur eine geringere Würzemenge im Vergleich zu durchschnittlich gelösten Malzen gewonnen werden. Dies bedeutet für den Brauer höhere Kosten und höheren Verarbeitungsaufwand, um die gleiche Menge Bier erzeugen zu können.

In gewissen Umfang kann in den Mälzereien durch Variation des Mälzprozesses die Qualität einer Charge Braugerste positiv beeinflußt werden. Dies ist jedoch nur in eingeschränktem Maße möglich und es können keine konstanten Malzqualitäten erzeugt werden. Schließlich kann auf das fertig gedarrte Malz auf biochemischem Wege nicht mehr eingewirkt werden.

Selbst bei gut gelösten Malzen führt die grobe Schrotung dazu, daß nicht alle extrakthaltigen Bestandteile in die Würze gelöst werden können. Aufgrund dieser unvollständigen Lösung verbleiben wertvolle extrahierbare Bestandteile im Treber zurück.

Aufgrund des deutschen Reinheitsgebotes wurden in der Vergangenheit erste Versuche unternommen, um durch rein physikalische Vorgänge die Eigenschaften des Malzes gezielt steuern zu können.

Prof. Schöffel Institut für Maschinen- und Appartekunde, Weihenstephan, TU München beschrieb im Jahre 1972 ein Verfahren zur Pulverisierung von Malz. Ziel war es, die Lösung von schlecht gelösten Malzen durch einen physikalischen Aufschluß zu verbessern. Man war davon ausgegangen, daß im Gegensatz zu grob geschrotetem Malz, ein vermahlenes Malz im Maischebottich besser ausgelöst werden kann und somit mehr Extrakt für die Würze gewonnen werden kann. Hierzu wird verwiesen auf Brauwissenschaft, Jahrgang 25 / Nr. 10, 20.Oktober 1972, Seiten 301 bis 312.

Hierbei wurde das ganze Korn bestehend aus Endosperm, Randzonen und Spelzen vermahlen. Das dabei gewonnene Pulverschrot hatte einen Grobgutanteil von mindestens 30% > 150 µm. Da die Spelzenanteile sehr hart aber elastisch sind, war ein stärkeres Zerkleinem des Schrotes mit den damaligen Zerkleinerungsmaschinen nicht möglich. Dies war auch nicht wünschenswert, da die groben Spelzenanteile weiterhin als Filtermittel in der klassischen Würzefiltration mit Läuterbottich dienten.

In einer weiteren Veröffentlichung von H. Kieninger, Institut für Technologie der Brauerei I, Weihenstephan, TU München wurde die Gewinnung von Würze aus Pulvermalzen aus drei getrennten Fraktionen, dem Endospermrnehl, dem Randzonenmehl und den Spelzen beschrieben. Dort wurden die Auswirkungen der drei Malzfraktionen auf die Bierqualität erforscht.

Diese Veröffentlichung gibt jedoch keinen Hinweis darauf auf welche Weise Endospermmehl, Randzonenmehl und Spelzen getrennt erhalten wurden. Es ist jedoch anzunehmen, daß die Fraktionen nur im Labormaßstab zu Forschungszwecken gewonnen werden konnten. Hierzu wird verwiesen auf Brauwelt, Jahrgang 112 / Nr. 75, 20.Oktober 1972, Seiten 1535 bis 1540.

Auf Grund der Erkenntnis über die ungünstigen Eigenschaften der Spelzen auf die Biereigenschaften und der Unerlässlichkeit der Spelzen bei der Würzefiltration wurde eine selektive Vermahlung des Malzes angestrebt. Dabei wird das Malz nach geeigneter Konditionierung in Prallmühlen derart vermahlen, daß der mürbe Endosperm sehr klein vermahlen wird und gleichzeitig die harten aber elastischen Spelzen weitgehend unvermahlen verbleiben.

So wird eine hohe Löslichkeit der Stärke aus dem Endosperm erreicht und eine Auslaugung der Spelzenanteile durch deren geringe spezifische Oberfläche weitgehend vermieden.

Ein Verfahren zur Herstellung eines solchen Maischproduktes ist aus der DE 44 28 978 A1 bekannt geworden. Dort wird vor der Vermahlung der Malzkörner ein Entspelzen der Malzkömer und ein Abtrennen der Spelzen von den Malzkörnern aufgezeigt.

Nachteilig ist hierbei, daß die Eigenschaften des Pulvermalzes durch den Verfahrensschritt der Behandlung mit Mikrowellen gesteuert wird. Das Pulvermalz wird durch Bestrahlung mit Mikrowellen oder durch Behandlung mit Heißluft in Farbe, Aroma und enzymatischer Kraft eingestellt. Dabei werden die erwünschten Aromastoffe (Melanoidine) erhalten und die unerwünschten Aromastoffe ausgetrieben.

Der Erfindung liegt die Aufgabe zugrunde, ein Verfahren zur Herstellung von Maischprodukten unterschiedlicher Fraktionen zu entwickeln.

Gelöst wird diese Aufgabe mit den Merkmalen des Anspruches 1. Vorteilhafte Ausgestaltungen sind den Unteransprüchen zu entnehmen.

Durch die anteilige Kombination der einzelnen, durch das Verfahren darstellbaren Fraktionen können Maischprodukte geschaffen werden, durch die die gewünschten Eigenschaften der Getränke gesteuert werden können.

So können beispielsweise Geschmack, Farbe und Schaum der späteren Biere durch gezielten Einsatz der erhaltenen Malzfraktionen eingestellt werden.

Möglich ist auch der alleinige Einsatz derartiger Maischprodukte zur Bierherstellung mit Maischefiltration. Durch die Bereitstellung von unterschiedlichen Malzmehlfraktionen können die Schwankungen der Malzqualitäten ausgeglichen werden und durch individuelle Kombination der Fraktionen maßgeschneiderte Biere mit spezifischen Eigenschaften durch den Brauer entwickelt werden.

Die durch das erfindungsgemäße Verfahren erzeugten Fraktionen weisen charakteristische Eigenschaften auf. Die Feingutfraktion [ FG 1 ] weist einen hohen Extraktgehalt mit wenig Eiweiß und niedrigen Polyphenol- und β-Glucan-Werten auf. Die Feingutfraktionen [ FG 2 und FG 3 ] weisen bei niedrigen Polyphenol- und β-Glucan-Werten einen hohen Eiweißgehalt auf ( ca. 13 - 20% i.Tr. ). Die Grobgutfraktion [ GG 3 ] ist gekennzeichnet durch hohen Eiweißgehalt und hohen Werten an Polyphenol und β-Glucan.

Ausführungsbeispiele werden nachfolgend anhand der Flußdiagramme verdeutlicht.

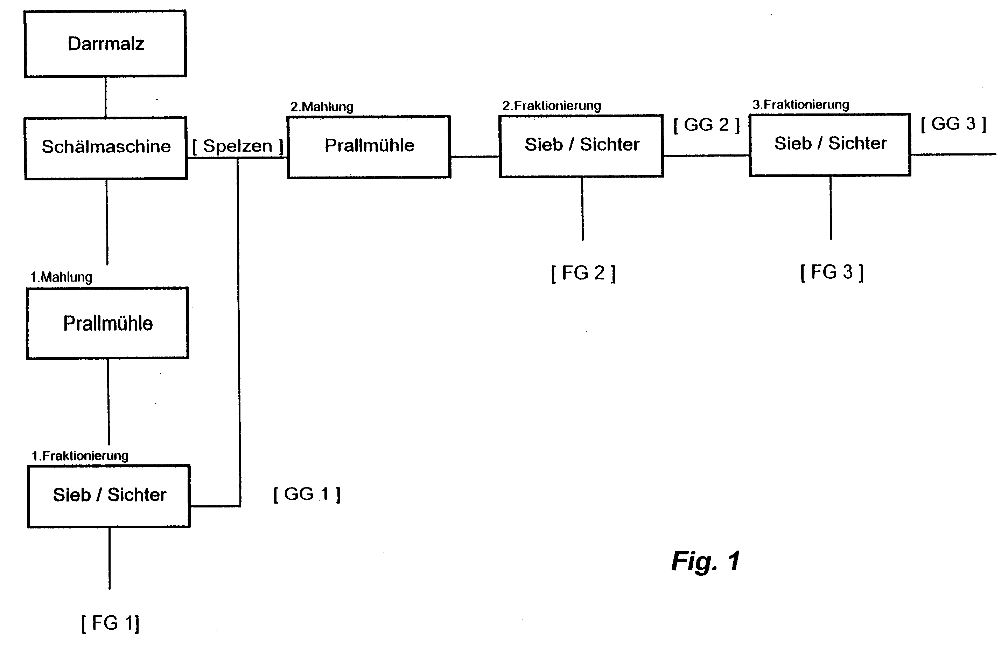

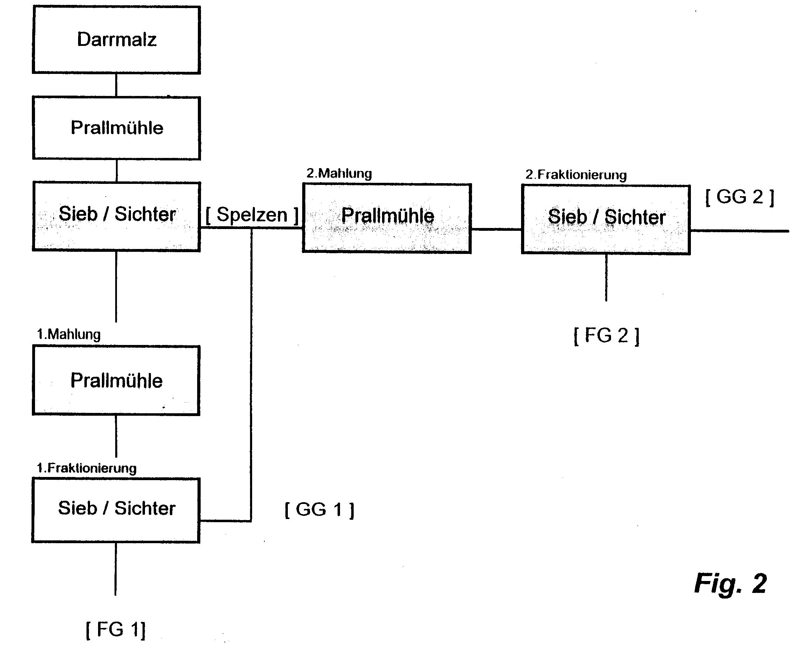

Das Darrmalz wird nach Fig. 1 einer Schälmaschine zugeführt. wo das Darrmalz entspelzt wird und die Spelzen von den Körner abgetrennt werden. Solche Schälmaschinen finden beim Schälen von Reis Verwendung. Alternativ dazu ist esnach Fig. 2 möglich, den Darrmalz anzufeuchten, in einer Prallmühle grob zu zerkleinern und durch Sichten oder in einem Luftstrahlsieb die Spelzen zu entfernen. Die Grobzerkleinerung erfolgt auf eine Korngröße von etwa 97 % < 600 µm.

Das weitgehend entspelzte Korn wird nunmehr einer Feinprallmühle zugeführt. Das so erhaltene Mehl wird einem Windsichter zugeführt, wo es in eine erste Feingutfraktion FG 1 und eine Grobgutfraktion GG 1 aufgetrennt wird. Die Feingutfraktion FG 1 weist einen hohen Stärkeanteil und einen relativ geringen Proteinanteil auf Sie stammt in erster Linie vom Endosperm. Die Korngröße der Feingutfraktion FG 1 beträgt etwa 95 % < 125 µm.

Etwa 10 % des von der Feinprallmühle stammenden Mehls wird als Grobgut GG 1 abgetrennt. Dieses Grobgut besteht in erster Linie aus Spelzen, die zuvor nicht abgetrennt wurden und aus relativ harten Schrotteilchen, welche insbesondere aus den Randzonen des Korns stammen.

Die zuvor abgetrennten Spelzen und die Grobgutfraktion GG 1 werden einer Prallmühle zugeführt. Die Zerkleinerung erfolgt bevorzugt bis auf eine Korngröße von etwa 95 % < 125 µm.

Das so erhaltene Mehl gelangt nunmehr in einen Windsichter. Im Windsichter findet eine Trennung einer weiteren Grobgutfraktion GG 2 von einer zweiten Feingutfraktion FG 2 statt. Die Feingutfraktion FG 2 weist im Vergleich zur Feingutfraktion FG 1 einen hohen Proteingehalt, jedoch einen vergleichsweise niedrigeren Stärkegehalt auf. Die Feingutfraktion FG 2 stammt primär aus den Randzonen des Gerstenkorns und zum Teil aus zermahlenen Spelzen. Hierbei ist anzumerken, daß die abgetrennten Spelzen zum Teil noch mit Teilen der Randzone behaftet sind.

Von dem dem Sichter zugeführten Mehl wird etwa 85 Gew.-% Grobgutfraktion GG 2 abgetrennt. Die zweite Feingutfraktion weist eine Korngröße von etwa 95 % < 20 µm auf.

Nach Fig. 1 kann sich an die 2. Franktionierung eine dritte Fraktionierung anschließen. Die weitere Grobgutfraktion GG 2 besteht aus Spelze und Schrot und wird einem Luftstrahlsieb zugeführt. Das Luftstrahlsieb weist eine Siebmaschenweite von 125 µm auf. Feine Spelzenteile und feine Schrotteile werden als Feingutfraktion FG 3 ausgebracht werden.

Die Feingutmehle der Feingutfraktionen FG 1, FG 2 und FG 3 können in Anteilen entsprechend der gewünschten Eigenschaften der herzustellenden Biere miteinander vermischt und vermaischt werden. Es ist auch möglicht, diese Mehle in den gewünschten Mischungsverhältnissen geschrotetem Darmalz zur Maischebildung zuzugeben.

## Patentansprüche

1. Verfahren zum Herstellen von Maischprodukten, bei dem das Mahlgut entspelzt wird, die Spelzen von den Körnern getrennt und die Körner sodann zu Mehl verarbeitet werden, dadurch gekennzeichnet, daß das Mahlgut nach der Mahlung fraktioniert wird und dabei eine erste Feingutfraktion (FG 1) erhalten wird und die von der ersten Feingutfraktion (FG 1) abgetrennte Grobgutfraktion (GG 1) zusammen mit den abgetrennten Spelzen vermahlen und fraktioniert wird und dabei eine zweite Feingutfraktion (FG 2) entsteht.

2. Verfahren nach Anspruch 1, dadurch gekennzeichnet, daß die von der zweiten Feingutfraktion (FG 2) abgetrennte weitere Grobgutfraktion (GG 2) zur Bildung einer dritten Feingutfraktion (FG 3) fraktioniert wird.

3. Verfahren nach Anspruch 1 bis 2, dadurch gekennzeichnet, daß die Fraktionierung durch Sichten erfolgt.

4. Verfahren nach Anspruch 3, dadurch gekennzeichnet, daß das Sichten in einem Windsichter erfolgt

5. Verfahren nach Anspruch 1 bis 2, dadurch gekennzeichnet, daß die Fraktionierung durch Sieben erfolgt.

6. Verfahren nach Anspruch 5, dadurch gekennzeichnet, daß die Siebung in einem Luftstrahlsieb erfolgt.

7. Verfahren nach Anspruch 1 bis 6, dadurch gekennzeichnet, daß die Mahlung in einer Feinprallmühle erfolgt.

8. Verfahren nach Anspruch 1 bis 7, dadurch gekennzeichnet, daß die Mahlung und die anschließende Sichtung in einem Verfahrensschritt in einer Sichtermühle erfolgt.

9. Verfahren nach Anspruch 1 bis 8, dadurch gekennzeichnet, daß beim ersten Fraktionieren des Mehles eine Grobgutfraktion (GG 1) von etwa 10 Gew.-% vom Mehl abgetrennt wird und die erste Feingutfraktion (FG 1) eine Korngröße von etwa 95% < 125 µm aufweist.

10. Verfahren nach Anspruch 9, dadurch gekennzeichnet, daß die Mahlung der Grobgutfraktion (GG 1) und der Spelzen auf eine Korngröße von etwa 95% < 125 µm erfolgt.

11. Verfahren nach Anspruch 10, dadurch gekennzeichnet, daß beim zweiten Fraktionieren der gemahlenen Grobgutfraktion (GG 1) und der Spelzen eine weitere Grobgutfraktion (GG 2) von etwa 85 Gew.-% vom Mehl abgetrennt wird und die zweite Feingutfraktion (FG 2) eine Korngröße von etwa 95% < 20 µm aufweist.

12. Verfahren nach Anspruch 11, dadurch gekennzeichnet, daß beim dritten Fraktionieren der Grobgutfraktion (GG 2) eine weitere Grobgutfraktion (GG 3) von etwa 10 Gew.-% vom Mehl abgetrennt wird und die dritte Feingutfraktion (FG 3) eine Korngröße von etwa 95% < 120 µm aufweist.
